# EUROPÄISCHE PATENTSCHRIFT

(11) **EP 4 504 530 B1**
(45) Veröffentlichungstag und Bekanntmachung des Hinweises auf die Patenterteilung: **08.04.2026**
(21) Anmeldenummer: 23710211.6
(22) Anmeldetag: 16.02.2023
(51) Int. Cl.: B60C 13/00

(54) **FAHRZEUGREIFEN**
VEHICLE TYRE
PNEUMATIQUE DE VÉHICULE

(30) Priorität: 06.04.2022 DE 102022203403
(43) Veröffentlichungstag der Anmeldung: 12.02.2025
(73) Patentinhaber: Continental Reifen Deutschland GmbH, 30175 Hannover (DE)
(72) Erfinder: BEHR, Ulrich, 30175 Hannover (DE)
(74) Vertreter: Continental Corporation
(86) Internationale Anmeldenummer: PCT/DE2023/200034
(87) Internationale Veröffentlichungsnummer: WO 2023/193850

(56) Entgegenhaltungen:
- EP-A1- 3 390 113
- EP-A1- 3 612 340
- JP-A- 2020 100 371
- JP-A- 2022 006 410
- JP-B2- 5 364 556

## Beschreibung

Die Erfindung betrifft einen Fahrzeugreifen mit einer dekorativen Seitenwandschraffur auf zumindest einer Seitenwand aus einer Vielzahl von nebeneinander verlaufenden Rippen, welche in ihrem Verlauf entlang von gerade verlaufenden Linien Knickstellen aufweisen und derart unter Bildung von schraffierten Flächenelementen, in welchen die Rippen jeweils geradlinig verlaufen, mehrmals ihre Richtung ändern.

Ein derartiger Fahrzeugreifen ist beispielsweise aus der EP 2 842 766 B1 bekannt. Der Fahrzeugreifen besitzt auf zumindest einer Seitenwand ein dekoratives Seitenwandmuster mit einer Schraffur aus einer Vielzahl von nebeneinander, insbesondere weitgehend parallel zueinander, verlaufenden Rippen, die eine Basisschraffur bilden. Aus der Basisschraffur stammende Rippen sind unter übereinstimmend großen Winkeln abgelenkt und bilden derart örtlich begrenzt Schraffurflächen aus, welche die Basisschraffur unterbrechen und dreidimensionale Formen bzw. Körper simulieren. Dabei ist es möglich, eine Vielzahl dreidimensionaler Geometrien bzw. dreidimensionaler Körper nachzubilden bzw. vorzutäuschen.

Aus der EP 3 390 113 A1 ist ein Fahrzeugreifen mit einer dekorativen Seitenwandschraffur auf zumindest einer Seitenwand aus nebeneinander geradlinig verlaufenden Rippen, welche Flächenelemente bilden, die gleichartige regelmäßige oder unregelmäßige n-Ecken sind, bekannt. Die Flächenelemente schließen über gemeinsame äußere Elementseiten unmittelbar aneinander an. Die Rippen verlaufen von einem zentralen Bereich des jeweiligen Flächenelements gerade sowie strahlenförmig zu den Elementseiten, wobei die Rippen an den Elementseiten unmittelbar aufeinanderstoßen. Diese Seitenwandschraffur soll für optisch einheitlich wirkende Licht- und Schatteneffekte sorgen.

Die JP 2020 100 371 A offenbart einen Fahrzeugreifen mit einer dekorativen Seitenwandschraffur aus kreissektorförmigen, schraffierten Flächenelementen, zu welchen um 180° verdreht zueinander orientierte, entlang ihrer Kreisradien aneinander angrenzende Flächenelemente gehören. Innerhalb jedes Flächenelements sind gerade verlaufende Rippen vorgesehen, welche ausgehend vom Kreismittelpunkt fächerartiger auseinanderlaufen. Eine derartige Seitenwandschraffur soll beim Fahren kaum zum Luftwiderstand beitragen und rissbeständig sein.

Die JP 2022 006 410 A offenbart einen Fahrzeugreifen mit einer dekorativen Seitenwandschraffur aus quaderförmigen, schraffierten Flächenelementen und aus parallelogrammförmigen, schraffierten Flächenelementen, wobei die Flächenelemente jeweils parallel und gerade verlaufende Rippen aufweisen. Je ein quaderförmiges Flächenelement simuliert in Kombination mit zwei benachbarten parallelogrammförmigen Flächenelementen einen Würfel, wobei sich die Ausrichtung der Rippen in jedem dieser Flächenelemente von den beiden anderen Flächenelementen unterscheidet. Diese Seitenwandschraffur soll eine verbesserte dekorative Wirkung und eine gute Sichtbarkeit aufweisen, wobei etwaige Unebenheiten auf der Seitenwand gut kaschiert werden sollen.

Aus der JP 5 364 556 B2 ist ein Fahrzeugreifen mit einer dekorativen Seitenwandschraffur aus parallelogrammförmigen Flächenelementen bekannt, wobei jeweils drei Flächenelemente, von welchen zwei mit einer Schraffur aus parallel und gerade verlaufende Rippen versehen sind und von welchen eines glatt ausgeführt ist, einen Würfel simulieren. Diese Seitenwandschraffur soll ebenfalls Unebenheiten auf der Seitenwand kaschieren.

Die EP 3 612 340 A1 offenbart einen Fahrzeugreifen mit einer dekorativen Seitenwandschraffur mit aus quaderförmigen oder hexagonalen, schraffierten Flächenelementen, welche jeweils mit parallel verlaufenden Rippen versehen sind, wobei die Rippen in aneinander angrenzenden Flächenelementen verschiedene Orientierungen aufweisen.

Der Erfindung liegt die Aufgabe zugrunde, eine dekorative Seitenwandschraffur zur Verfügung zu stellen, die nicht nur lokal begrenzt, sondern über eine wesentlich größere Fläche, insbesondere über die gesamte Fläche der dekorativen Seitenwandschraffur, einen räumlichen bzw. dreidimensionalen Eindruck vermittelt und daher besonders gut dafür geeignet ist, etwaige Unebenheiten in den Reifenseitenwänden zu kaschieren.

Gelöst wird die gestellte Aufgabe erfindungsgemäß dadurch, dass sich die Seitenwandschraffur aus in Umfangsrichtung der Seitenwand unmittelbar aufeinanderfolgenden, gleich gestalteten und in radialer Richtung orientierten Musterelementen mit weitgehend übereinstimmend ausgeführten Rippen zusammensetzt, wobei die Musterelemente jeweils von zwei in radialer Richtung verlaufenden, parallel oder weitgehend parallel zueinander und weitgehend gleichmäßig zick-zack-förmig verlaufenden Rippen seitlich begrenzt sind, wobei die Knickstellen der Rippen entlang von Verbindungslinien zwischen den vorspringenden Ecken und zwischen den einspringenden Ecken der beiden das jeweilige Musterelement seitlich begrenzenden Rippen ausgebildet sind, derart, dass die Flächenelemente in radialer Richtung aufeinander folgende unregelmäßige Vierecke sind, in welchen die Rippen jeweils fächerartig verlaufen.

Eine gemäß der Erfindung gestaltete Seitenwandschraffur setzt sich aus gleich gestalteten Musterelementen zusammen, die über ihre gesamte Fläche aus schraffierten Flächenelementen, randseitig ggf. aus Teilen von schraffierten Flächenelementen, bestehen, deren besondere Gestaltung mit fächerartig verlaufenden, also entweder zusammen oder auseinander verlaufenden, aber gleich ausgeführten Rippen, einen dreidimensionalen bzw. räumlichen Eindruck über einen beliebig großen Umfangsabschnitt der Seitenwand erzeugen kann. Der erzielbare räumliche bzw. dreidimensionale Effekt wird vor allem dadurch unterstützt, dass der fächerartige Verlauf dunkler und heller erscheinende Bereiche schafft, insbesondere im Bereich der Knickstellen. Die Seitenwandschraffur erzeugt somit besondere Licht- und Schatteneffekte erzeugt, die unterschiedliche Reflexionsgrade ergeben, wodurch Unebenheiten in den Reifenseitenwänden besonders gut kaschiert werden.

Bei einer bevorzugten Ausführung sind die Knickstellen der Rippen an den Verbindungslinien zwischen den vorspringenden Ecken der einen seitlichen Rippe und den in radialer Richtung folgenden vorspringenden Ecken der anderen seitlichen Rippe sowie an Verbindungslinien zwischen den einspringenden Ecken der einen seitlichen Rippe und einer in gleicher radialer Richtung, wie erwähnt, folgenden einspringenden Ecke der anderen seitlichen Rippe ausgebildet, sodass jeweils zwei weitgehend gleichgestaltete und zueinander um 180° verdrehte viereckige Flächenelemente aufeinanderfolgen. Dadurch ergibt sich eine besonders auffallende dreidimensional wirkende Gestaltung und ein charakteristischer fächerartiger Verlauf der Rippen innerhalb der Flächenelemente mit besonders auffallenden Licht- und Schatteneffekten.

Weitere besondere Ausgestaltungen tragen zur dreidimensionalen und plastischen Wirkung der Musterelemente und damit der Seitenwandschraffur bei.

Gemäß einer dieser Ausgestaltungen gehen die Rippen in den Musterelementen von einem gemeinsamen Basisniveau aus und weisen einen im Wesentlichen dreieckigen Querschnitt mit Spitzenbereichen mit einer Breite von 0,05 mm bis 0,15 mm sowie seitliche Flanken auf, die relativ zu einer Senkrechten auf das Basisniveau unter einem Winkel von 20° bis 45° verlaufen.

In Zusammenhang mit der dreidimensionalen Wirkung ist auch der Verlauf der Zick-Zack-Abschnitte der seitlichen Rippen der Musterelemente von Bedeutung. Diesbezüglich ist es von Vorteil, wenn die Zick-Zack-Abschnitte der seitlichen Rippen in den einspringenden Ecken miteinander Außenwinkel einschließen, in den vorspringenden Ecken miteinander Innenwinkel einschließen, wobei Innenwinkel und Außenwinkel weitgehend gleich groß sind, und je nach der gewählten Zick-Zack-Form, 100° bis 160° betragen.

Ein besonders auffallender fächerartiger Verlauf der Rippen wird durch deren gegenseitigen Abstand mitgeprägt. Diesbezüglich ist es bevorzugt, wenn die Rippen am Basisniveau an ihren Knickstellen entlang der Verbindungslinien zwischen den einspringenden Ecken einen gegenseitigen Abstand von bis zu 0,20 mm, also einen sehr geringen gegenseitigen Abstand, aufweisen. Dabei kann auch gar kein Abstand mehr zwischen den Rippen vorhanden sein, wobei einander benachbarte Erhebungen auch teilweise überlappen können. Derartige Stellen im Verlauf der Rippen erscheinen besonders dunkel. An ihren Knickstellen entlang der Verbindungslinien zwischen den vorspringenden Ecken weisen die Rippen am Basisniveau bevorzugt einen konstanten oder weitgehend konstanten gegenseitigen Abstand von 0,30 mm bis 0,60 mm auf.

Bei einer besonders auffallenden dreidimensionalen Seitenwandgestaltung bedeckt die Seitenwandschraffur, auf einem oder mehreren insbesondere kreisringförmigen Seitenwandabschnitt(en) ausgebildet, insgesamt zumindest ein Achtel der Seitenwandfläche.

Weitere Merkmale, Vorteile und Einzelheiten der Erfindung werden nun anhand der Zeichnung, die ein Ausführungsbeispiel darstellt, näher beschrieben. Dabei zeigen
Fig. 1 einen Umfangabschnitt einer Seitenwand eines Fahrzeugreifens mit einer dekorativen Seitenwandschraffur aus sich wiederholenden schraffierten Musterelementen,
Fig. 2 ein vergrößertes Basismuster eines Musterelementes,
Fig. 3 einen vergrößerten Schnitt entlang der Linie III-III der Fig. 2 und
Fig. 4 einen vergrößerten Schnitt entlang der Linie IV-IV der Fig. 2.

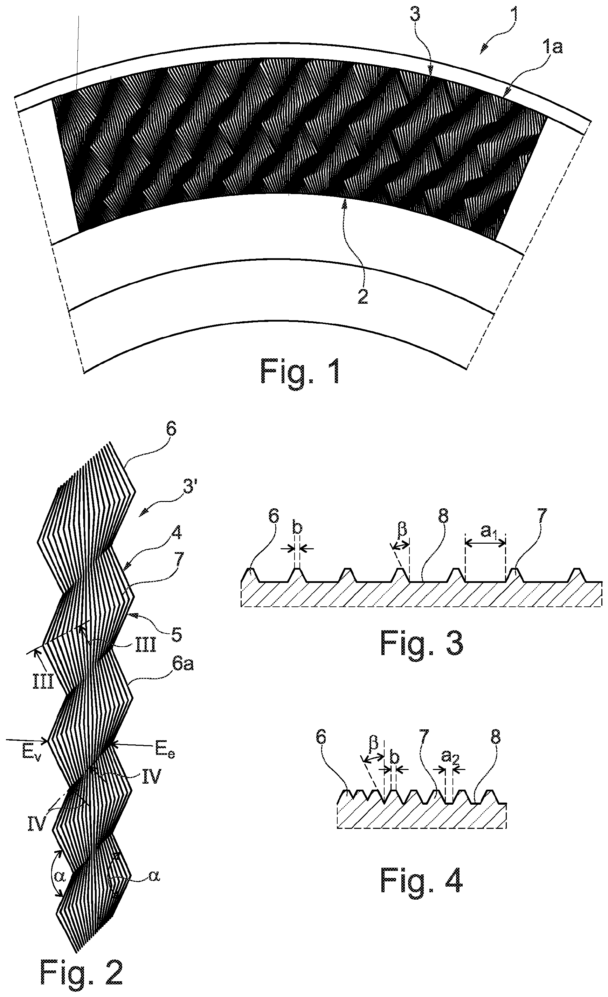

Fig. 1 zeigt schematisch eine in die Ebene projizierte Darstellung eines Umfangsabschnittes einer Seitenwand 1 eines Fahrzeugreifens, welcher ein Reifen beliebiger Bauart, insbesondere ein Radialreifen, und ferner ein Reifen beliebigen Typs, insbesondere ein Reifen für Personenkraftwagen, Light-Trucks oder Nutzfahrzeuge, ist.

Nachdem die Seitenwand 1 eines Fahrzeugreifens eine Kreisringgestalt aufweist ändern sich gegenseitige Abstände oder Dimensionen von in radialer Richtung verlaufenden Bestandteilen der Seitenwandschraffur entsprechend. Diesem Umstand wird in der nachfolgenden Beschreibung und in den Patentansprüchen zum Teil dadurch Rechnung getragen, dass der Begriff "weitgehend" verwendet wird.

Der in Fig. 1 dargestellte Umfangsabschnitt der Seitenwand 1 enthält einen als Abschnitt eines Kreisringes gestalteten Seitenwandabschnitt 1a, auf welchem eine dekorative Seitenwandschraffur 2 ausgebildet ist. Der Seitenwandabschnitt 1a weist eine in radialer Richtung ermittelte Breite auf, die je nach Reifendimension in der Größenordnung von 1,00 cm bis 50,00 cm beträgt und ist insbesondere ein Bestandteil eines die Seitenwand 1 kreisringförmig umlaufenden Gesamtdesigns, sodass die Seitenwandschraffur 2 an mehreren Stellen des Umfangs ausgebildet sein kann. Radial innerhalb des Seitenwandabschnittes 1a befinden sich üblicherweise glatte Seitenwandbereiche, welche insbesondere mit den Reifen kennzeichnenden Daten versehen sind.

Wie Fig. 1 zeigt, setzt sich die Seitenwandschraffur 2 aus einer Vielzahl von in Umfangsrichtung aufeinanderfolgenden und unmittelbar aneinander anschließenden, daher sich auf diese Weise wiederholenden Musterelementen 3 zusammen. Unter Vielzahl sind dabei zumindest zwei Musterelemente 3, insbesondere jedoch wesentlich mehr als zwei Musterelemente 3, beispielsweise fünf bis dreißig Musterelemente 3 in jedem Seitenwandabschnitt 1a zu verstehen.

Die Ausgestaltung eines einem Musterelement 3 zugrunde liegenden Basismusters 3' zeigt Fig. 2. Das Basismuster 3' setzt sich aus in einer in radialer Richtung verlaufenden Reihe aus abwechselnd aufeinander folgenden Flächenelementen 4, 5 zusammen, die mit über sämtliche Flächenelemente 4, 5 durchgehend verlaufenden Rippen 6, 7 schraffiert sind.

Wie beispielsweise Fig. 3 und Fig. 4 zeigen, gehen die Rippen 6, 7 von einem Basisniveau 8 aus und weisen einen im Wesentlichen dreieckigen Querschnitt mit Spitzenbereichen mit einer Breite b von 0,05 mm bis 0,15 mm und seitliche Flanken auf, die unter einem Winkel β von 20° bis 45° relativ zu einer Senkrechten auf das Basisniveau 8 verlaufen. Bevorzugt sind sämtliche Erhebungen 6, 7 in den Musterelementen 3 bezüglich ihrer Querschnittsgestaltung gleich ausgeführt.

Das Basismuster 3' ist seitlich von je einer Rippe 6 als "Seitenkante" begrenzt, wobei die beiden Rippen 6 jeweils in radialer Richtung in übereinstimmenden und weitgehend regelmäßigen Zick-Zack-Formen - mit weitgehend gleich langen Zick-Zack-Abschnitten 6a - verlaufen. Die beiden Rippen 6 können dabei auch geringfügig, insbesondere um bis zu 3,00 mm, gegeneinander in radialer Richtung versetzt verlaufen.

Der gegenseitige Abstand der beiden Rippen 6 ist insbesondere derart gewählt, dass ein Musterelement 3 über 3° bis 5° eines Kreises verläuft.

In Folge der Zick-Zack-Form weisen die beiden Rippen 6, hinsichtlich ihres gegenseitigen Verlaufes betrachtet, einspringende Ecken Eₑ und vorspringende Ecken Eᵥ auf. An geraden Verbindungslinien zwischen den vorspringenden Ecken Eᵥ der einen Rippe 6 und den in radialer Richtung folgenden vorspringenden Ecken Eᵥ der anderen Rippe 6 sowie an geraden Verbindungslinien zwischen den einspringenden Ecken Eₑ der einen Rippe 6 und den in radialer Richtung folgenden einspringenden Ecken Eᵥ der anderen Rippe 6 liegen jeweils Knickstellen im Verlauf der das Basismuster 3' bildenden Rippen 6, 7 vor, sodass derart die erwähnten Flächenelemente 4, 5 unregelmäßige Vierecke sind. In den einspringenden Ecken Eₑ schließen die Zick-Zack-Abschnitte 6a miteinander Außenwinkel α, in den vorspringenden Ecke Eᵥ schließen die Zick-Zack-Abschnitte 6a miteinander Innenwinkel α ein, die weitgehend gleich groß sind und, je nach der gewählten Zick-Zack-Form, 100° bis 160° betragen.

Die Gestalt der Flächenelemente 4, 5 ergibt sich somit grundsätzlich durch den Verlauf der Rippen 6, 7, wobei die Flächenelemente 4, 5 weitgehend gleich gestaltet sind und jeweils zueinander um 180° verdreht aufeinander folgen.

Wie Fig. 3 zeigt, weisen die Rippen 6,7 an ihren Knickstellen entlang der Verbindungslinien zwischen den vorspringenden Ecken Eᵥ und am Basisniveau 8 einen konstanten oder weitgehend konstanten gegenseitigen Abstand a₁ von 0,30 mm bis 0,60 mm auf. Von diesen Knickstellen ausgehend verlaufen die Rippen 6, 7 zu den anschließenden Knickstellen entlang der Verbindungslinien zwischen den einspringenden Ecken Eₑ fächerartig zusammen, wobei dadurch, dass die Verbindungslinien zwischen den Ecken Eᵥ und den Ecken Eₑ unterschiedliche Neigungen relativ zur radialen Richtung aufweisen, nahe von einspringenden Ecken Eₑ ein Teil der Erhebungen 7 nur mit sehr geringem oder ohne gegenseitigen Abstand zueinander verlaufen. In diesen Bereichen können einander benachbarte Erhebungen 6, 7 auch teilweise überlappen, wie es in der Schnittdarstellung in Fig. 4 links zu sehen ist. Der gegenseitige Abstand a₂ der Rippen 6, 7 an den Knickstellen zwischen den einspringenden Ecken Eₑ ist daher geringer als der gegenseitige Abstand a₁ (Fig. 3) an ihren Knickstellen entlang der Verbindungslinien zwischen den vorspringenden Ecken Eᵥ und beträgt insbesondere bis zu 0,20 mm.

Die aufeinanderfolgenden Musterelemente 3 in Fig. 1 sind jeweils Abschnitte des in Fig. 2 gezeigten Basismusters 3', sodass an den Randkanten des Kreisringabschnittes Teilbereiche von Flächenelementen 4, 5 vorhanden sind.

### Bezugszeichenliste

- 1: Seitenwand
- 1a: Seitenwandabschnitt
- 2: Seitenwandschraffur
- 3: Musterelement
- 3': Basismuster
- 4, 5: Flächenelement
- 6, 7: Rippe
- 6a: Zick-Zack-Abschnitt
- 8: Basisniveau
- Eₑ: einspringendes Eck
- Eᵥ: vorspringendes Eck
- a₁, a₂: Abstand
- b: Breite
- α: Innen- bzw. Außenwinkel
- β: Winkel

## Patentansprüche

1. Fahrzeugreifen mit einer dekorativen Seitenwandschraffur (2) auf zumindest einer Seitenwand (1) aus einer Vielzahl von nebeneinander verlaufenden Rippen (6, 7), welche in ihrem Verlauf entlang von gerade verlaufenden Linien Knickstellen aufweisen und derart unter Bildung von schraffierten Flächenelementen (4, 5), in welchen die Rippen (6, 7) jeweils geradlinig verlaufen, mehrmals ihre Richtung ändern,
**dadurch gekennzeichnet,**
**dass** sich die Seitenwandschraffur (2) aus in Umfangsrichtung der Seitenwand (1) unmittelbar aufeinanderfolgenden, gleich gestalteten und in radialer Richtung orientierten Musterelementen (3) mit weitgehend übereinstimmend ausgeführten Rippen (6, 7) zusammensetzt, wobei die Musterelemente (3) jeweils von zwei in radialer Richtung verlaufenden, parallel oder weitgehend parallel zueinander und weitgehend gleichmäßig zick-zack-förmig verlaufenden Rippen (6) seitlich begrenzt sind, wobei die Knickstellen der Rippen (6, 7) entlang von Verbindungslinien zwischen den vorspringenden Ecken (Eᵥ) und zwischen den einspringenden Ecken (Eₑ) der beiden das jeweilige Musterelement (3) seitlich begrenzenden Rippen (6) ausgebildet sind, derart, dass die Flächenelemente (4, 5) in radialer Richtung aufeinander folgende unregelmäßige Vierecke sind, in welchen die Rippen (6, 7) jeweils fächerartig verlaufen.

2. Fahrzeugreifen nach Anspruch 1, **dadurch gekennzeichnet, dass** die Knickstellen der Rippen (6, 7) an den Verbindungslinien zwischen den vorspringenden Ecken (Eᵥ) der einen seitlichen Rippe (6) und den in radialer Richtung folgenden vorspringenden Ecken (Eᵥ) der anderen seitlichen Rippe (6) sowie an Verbindungslinien zwischen den einspringenden Ecken (Eₑ) der einen seitlichen Rippe (6) und den in gleicher radialer Richtung, wie erwähnt, folgenden einspringenden Ecken (Eᵥ) der anderen seitlichen Rippe (6) ausgebildet sind, sodass jeweils zwei weitgehend gleich gestaltete und zueinander um 180° verdrehte viereckige Flächenelemente (4, 5) aufeinander folgen.

3. Fahrzeugreifen nach Anspruch 1 oder 2, **dadurch gekennzeichnet, dass** die Rippen (6, 7) in den Musterelementen (3) von einem gemeinsamen Basisniveau (8) ausgehen und einen im Wesentlichen dreieckigen Querschnitt mit Spitzenbereichen mit einer Breite (b) von 0,05 mm bis 0,15 mm und seitliche Flanken aufweisen, die relativ zu einer Senkrechten auf das Basisniveau (8) unter einem Winkel (β) von 20° bis 45° verlaufen.

4. Fahrzeugreifen nach einem oder mehreren der Ansprüche 1 bis 3, **dadurch gekennzeichnet, dass** die Zick-Zack-Abschnitte (6a) der seitlichen Rippen (6) in den einspringenden Ecken (Eₑ) miteinander Außenwinkel (α), in den vorspringenden Ecken (Eᵥ) miteinander Innenwinkel (α) einschließen, die weitgehend gleich groß sind und, je nach der gewählten Zick-Zack-Form, 100° bis 160° betragen.

5. Fahrzeugreifen nach einem oder mehreren der Ansprüche 1 bis 4, **dadurch gekennzeichnet, dass** die Rippen (6,7) am Basisniveau (8) an ihren Knickstellen entlang der Verbindungslinien zwischen den einspringenden Ecken (Eₑ) einen gegenseitigen Abstand (a₂) von bis zu 0,20 mm aufweisen.

6. Fahrzeugreifen nach Anspruch 5, **dadurch gekennzeichnet, dass** einander benachbarte Erhebungen (6, 7) teilweise überlappen.

7. Fahrzeugreifen nach einem oder mehreren der Ansprüche 1 bis 4, **dadurch gekennzeichnet, dass** die Rippen (6, 7) am Basisniveau (8) an ihren Knickstellen entlang der Verbindungslinien zwischen den vorspringenden Ecken (Eᵥ) einen konstanten oder weitgehend konstanten gegenseitigen Abstand (a₁) von 0,30 mm bis 0,60 mm aufweisen.

8. Fahrzeugreifen nach einem oder mehreren der Ansprüche 1 bis 7, **dadurch gekennzeichnet, dass** die Seitenwandschraffur (2) auf einem oder mehreren insbesondere kreisringförmigen Seitenwandabschnitt(en) (1a) ausgebildet ist und insgesamt zumindest ein Achtel der Seitenwandfläche bedeckt.

## Claims

1. Vehicle tyre having decorative sidewall hatching (2) on at least one sidewall (1), said hatching comprising a multiplicity of ribs (6, 7) which run next to one another and have bend points in their path along straight lines and in this way change their direction multiple times so as to form hatched surface elements (4, 5) in which the ribs (6, 7) in each case run straight,
**characterized**
**in that** the sidewall hatching (2) is made up of pattern elements (3) which follow one another directly in the circumferential direction of the sidewall (1), are of identical design and are oriented in the radial direction and which have largely correspondingly formed ribs (6, 7), wherein the pattern elements (3) are delimited laterally in each case by two ribs (6) running in the radial direction and running parallel or largely parallel to one another and in a largely uniformly zigzagging manner, wherein the bend points of the ribs (6, 7) are formed along connecting lines between the projecting corners (Eᵥ) and between the recessed corners (Eₑ) of the two ribs (6) that laterally delimit the respective pattern element (3), in such a way that the surface elements (4, 5) are irregular quadrilaterals which follow one another in the radial direction and in which the ribs (6, 7) in each case run in a fan-like manner.

2. Vehicle tyre according to Claim 1, **characterized in that** the bend points of the ribs (6, 7) are formed on the connecting lines between the projecting corners (Eᵥ) of the one lateral rib (6) and the projecting corners (Eᵥ) of the other lateral rib (6) that follow in the radial direction and on connecting lines between the recessed corners (Eₑ) of the one lateral rib (6) and the recessed corners (Eᵥ) of the other lateral rib (6) that follow in the same radial direction, as stated, so that in each case two largely identically formed quadrilateral surface elements (4, 5) that are rotated through 180° with respect to one another follow one another.

3. Vehicle tyre according to Claim 1 or 2, **characterized in that** the ribs (6, 7) in the pattern elements (3) proceed from a common base level (8) and have a substantially triangular cross section with tip regions having a width (b) of 0.05 mm to 0.15 mm and have lateral flanks which extend at an angle (ß) of 20° to 45° relative to a perpendicular to the base level (8).

4. Vehicle tyre according to one or more of Claims 1 to 3, **characterized in that** the zigzag portions (6a) of the lateral ribs (6) include outer angles (α) with one another at the recessed corners (Eₑ) and include inner angles (α) with one another at the projecting corners (Eᵥ), said angles being largely the same size and, according to the selected zigzag shape, 100° to 160°.

5. Vehicle tyre according to one or more of Claims 1 to 4, **characterized in that**, at their bend points along the connecting lines between the recessed corners (Eₑ), the ribs (6,7) have at the base level (8) a mutual spacing (a₂) of up to 0.20 mm.

6. Vehicle tyre according to Claim 5, **characterized in that** some mutually adjacent elevations (6, 7) overlap.

7. Vehicle tyre according to one or more of Claims 1 to 4, **characterized in that**, at their bend points along the connecting lines between the projecting corners (Eᵥ), the ribs (6, 7) have at the base level (8) a constant or largely constant mutual spacing (a₁) of 0.30 mm to 0.60 mm.

8. Vehicle tyre according to one or more of Claims 1 to 7, **characterized in that** the sidewall hatching (2) is formed on one or more in particular circular-ring-shaped sidewall portion(s) (1a) and overall covers at least one eighth of the sidewall surface.

## Revendications

1. Pneumatique de véhicule présentant, sur au moins une paroi latérale (1) des hachures de paroi latérale décoratives (2) formées par une pluralité de nervures (6, 7) s'étendant les unes à côté des autre, lesquelles présentent des plis dans leur étendue le long de lignes droites et modifient ainsi leur direction plusieurs fois pour former des éléments de surface hachurés (4, 5) dans lesquels les nervures (6, 7) s'étendent chacune en ligne droite,
**caractérisé**
**en ce que** les hachures de paroi latérale (2) sont constituées d'éléments de motif (3) de configuration identique, qui se succèdent directement dans la direction circonférentielle de la paroi latérale (1) et sont orientés dans la direction radiale conjointement avec des nervures (6, 7) largement correspondantes, chacun des éléments de motif (3) étant délimité latéralement par deux nervures (6) qui s'étendent dans la direction radiale, en parallèle ou largement en parallèle l'une à l'autre, et largement uniformément en forme de zigzag, les plis des nervures (6, 7) étant formés le long de lignes de liaison entre les coins saillants (Eᵥ) et entre les coins en retrait (Eₑ) des deux nervures (6) délimitant latéralement l'élément de motif (3) respectif de telle sorte que les éléments de surface (4, 5) dans la direction radiale sont des quadrilatères irréguliers successifs dans lesquels les nervures (6, 7) s'étendent chacune en éventail.

2. Pneumatique de véhicule selon la revendication 1, **caractérisé en ce que** les plis des nervures (6, 7) sont formés sur les lignes de liaison entre les coins saillants (Eᵥ) de l'une des nervures latérales (6) et les coins saillants (Eᵥ) qui suivent dans la direction radiale de l'autre nervure latérale (6), ainsi que sur les lignes de liaison entre les coins en retrait (Eₑ) de l'une des nervures latérales (6) et les coins en retrait (Eᵥ) qui suivent dans la même direction radiale, comme mentionné, de l'autre nervure latérale (6), de telle sorte que deux éléments de surface quadrilatéraux (4, 5) de configuration sensiblement identique et tournés de 180° l'un par rapport à l'autre sont respectivement disposés à la suite l'un de l'autre.

3. Pneumatique de véhicule selon la revendication 1 ou 2, **caractérisé en ce que** les nervures (6, 7) dans les éléments de motif (3) partent d'un niveau de base commun (8) et présentent une section transversale sensiblement triangulaire avec des régions de pointe ayant une largeur (b) de 0,05 mm à 0,15 mm et des flancs latéraux. qui forment un angle (ß) de 20° à 45° par rapport à une perpendiculaire au niveau de base (8).

4. Pneumatique de véhicule selon l'une ou plusieurs des revendications 1 à 3, **caractérisé en ce que** les sections en zigzag (6a) des nervures latérales (6) forment entre elles des angles extérieurs (α) dans les coins en retrait (Eₑ), des angles intérieurs (α) dans les coins saillants (Eᵥ) qui sont sensiblement de même taille et, selon la forme en zigzag choisie, sont compris entre 100° et 160°.

5. Pneumatique de véhicule selon l'une ou plusieurs des revendications 1 à 4, **caractérisé en ce que** les nervures (6,7) au niveau de la base (8) présentent une distance mutuelle (a₂) allant jusqu'à 0,20 mm au niveau de leurs plis le long des lignes de liaison entre les coins en retrait (Eₑ).

6. Pneumatique de véhicule selon la revendication 5, **caractérisé en ce que** des protubérances (6, 7) adjacentes les unes aux autres se chevauchent partiellement.

7. Pneumatique de véhicule selon l'une ou plusieurs des revendications 1 à 4, **caractérisé en ce que** les nervures (6, 7) au niveau de la base (8) présentent une distance mutuelle (a₁) constante ou sensiblement constante de 0,30 mm à 0,60 mm au niveau de leurs plis le long des lignes de liaison entre les coins saillants (Eᵥ).

8. Pneumatique de véhicule selon l'une ou plusieurs des revendications 1 à 7, **caractérisé en ce que** les hachures de paroi latérale (2) sont formées sur une ou plusieurs sections de paroi latérale (1a), en particulier en forme d'anneau circulaire, et recouvrent au total au moins un huitième de la surface de paroi latérale.
